# EUROPEAN PATENT SPECIFICATION

(11) **EP 3 977 020 B1**
(45) Date of publication and mention of the grant of the patent: **06.03.2024**
(21) Application number: 20729719.3
(22) Date of filing: 29.05.2020
(51) Int. Cl.: F24F 11/39, F24F 11/56, F24F 13/20, B01D 46/00, B01D 35/143, F24F 11/63

(54) **SYSTEMS AND METHODS FOR DETECTING THE STATUS OF A PARTICLE FILTER**
SYSTEME UND VERFAHREN ZUR ERKENNUNG DES ZUSTANDS EINES PARTIKELFILTERS
SYSTÈMES ET PROCÉDÉS DE DÉTECTION DE L'ÉTAT D'UN FILTRE À PARTICULES

(30) Priority: 30.05.2019 WO PCT/CN2019/089366; 26.11.2019 EP 19211373
(43) Date of publication of application: 06.04.2022
(73) Proprietor: Koninklijke Philips N.V., 5656 AG Eindhoven (NL)
(72) Inventor: SU, Jing, 5656 AE Eindhoven (NL); ZHANG, Qiushi, 5656 AE Eindhoven (NL); CHEN, Weizhong, 5656 AE Eindhoven (NL); KELLY, Declan Patrick, 5656 AE Eindhoven (NL)
(74) Representative: Vollering, Stefanus Franciscus Maria
(86) International application number: PCT/EP2020/064935
(87) International publication number: WO 2020/239966

(56) References cited:
- DE-A1-102009 047 614
- JP-A- 2010 266 882
- US-A1- 2016 045 854
- US-A1- 2017 189 846
- US-A1- 2018 012 479
- US-A1- 2018 250 622

## Description

### FIELD OF THE INVENTION

The present invention relates to methods and systems for detecting the status, and hence lifetime, of particle filters.

### BACKGROUND OF THE INVENTION

Particle filters are widely used in air cleaning systems, for removing particulate matter from an air flow. They are for example used within domestic or industrial air purification systems for cleaning indoor air, but they also have many uses in other applications, such as in vacuum cleaners or air treatment systems.

Particle filters have a limited lifetime and need to be replaced (or cleaned) for optimum performance. Over time, due to the accumulation of particles on the filter, the air flow through the filter reduces as a result of the increased resistance, leading to slower intake of air through the air purification system. The air cleaning performance thus decays over time with use.

The most simple method to remind a consumer of the need for filter replacement is to alert the consumer based on the accumulated device operating time. In this way, the user can be given advance warning of the need to replace the filter. However, each filter in practice has a different point in time at which it is no longer able to purify air to the required standard. This point in time is the end of a particular cycle depending on the habits of the user and different air conditions.

It would be desirable to be able to assess when a filter needs cleaning or replacement more accurately. This can be achieved by analyzing the current performance of the filter, and then estimating the remaining lifetime of the filter, in order to warn the user to replace the filter to maintain effective air purification.

Thus, in order to assess an air filter to determine the most suitable time for filter replacement, sensor-based devices are known for detecting changes in parameters such as airflow and differential pressure, or for analyzing an optical signal which indicates when the filter is clogged.

These approaches require additional sensing systems, adding cost and complexity to the air cleaning system.

US 2018/0012479 discloses a system for determining when a filter needs to be changed, based on pressure measurements across the filter. In addition, a microphone may be used to capture sound information, which indicates a speed at which the filter fan is being operated. This is used to assist in the processing of the pressure measurement signals.

It would be desirable to have a lower cost system for providing accurate monitoring of the need for replacement of a particle filter of an air cleaning system.

### SUMMARY OF THE INVENTION

The invention is defined by the claims.

According to examples in accordance with an aspect of the invention, there is provided a monitoring device for monitoring an air cleaning system for determining when a particle filter of the air cleaning system needs cleaning or replacement, wherein the monitoring device comprises a remote monitoring device which is for application to the air cleaning system when a periodic monitoring function is to be performed and for removal from the air cleaning system between periodic monitoring functions, wherein the monitoring device comprises:
a microphone for capturing sounds of the air cleaning system during use and generating microphone signals;
a processor for processing the microphone signals and for monitoring changes in the microphone signals over time; and
an output device for providing information relating to the filter status based on the evolution of the microphone signals.

The invention makes use of a remote monitoring device for analyzing sounds of the air cleaning system to detect the degree of filter clogging. The sound of the air flow passing through the filter will change as a function of the filter clogging, and these changes can be detected and interpreted.

By using a remote monitoring device, the same monitoring device may be used for multiple air cleaning systems, thereby reducing cost. It provides a more universal approach, since it is not necessary to provide an audio sensor in the air cleaning system itself. For example, the remote monitoring device may be a smartphone or tablet, and may thus make use of an existing microphone. Alternatively, it may be a dedicated monitoring device, but it may be used with multiple air cleaning systems.

The monitoring device is for example for application to a specific monitoring location of the air cleaning system or for positioning at a specific monitoring location relative to the air cleaning system. In this way, it can be ensured that the evolution of the air cleaning system sounds is reliably detected. The specific monitoring location of the air cleaning system is for example in the vicinity of an air outlet. This is the best location to detect sound changes caused by filter clogging. The monitoring device may be positioned at this location using physical alignment features, or by providing the user with feedback to guide movement of the remote monitoring device to that location.

The processor is for example adapted to operate a machine learning algorithm. This provides an effective way for the system to learn how the sounds evolve and interpret these sound changes in dependence on the degree of filter clogging.

The invention also provides an air cleaning system, comprising:
an air inlet;
a particle filter;
a fan for driving air through the particle filter; and
an outlet,
wherein the air cleaning system further comprises a docking area which functions as a monitoring location to which a remote audio monitoring device is applied, for performing a periodic monitoring function of the air cleaning system, thereby for providing information relating to the filter status based on the evolution of the sound generated at the docking area.

This air cleaning system does not need any on-board sensors for monitoring filter clogging, since a remote audio monitoring device can be applied to the docking area. The docking area is for example in the vicinity of the air outlet.

The information relating to the filter status for example enables an advance warning to be given of when the filter will need replacing. For example, the remaining lifetime of the filter may be determined.

In one arrangement, the air cleaning system further comprises software for loading on a smartphone or tablet thereby to implement the remote monitoring device. Thus, the air cleaning system may be provided with an app for use on a tablet or smartphone which then configures the smartphone or tablet as a remote monitoring device.

In another arrangement, the air cleaning system further comprises the remote monitoring device. In this example, the remote monitoring device may be a device specifically for monitoring the air cleaning system and hence provided as part of an air cleaning system , but it may be used to monitor a set of air cleaning systems, again saving the number of components needed.

The invention also provides a method for monitoring an air cleaning system for determining when a particle filter of the air cleaning system needs cleaning or replacement, comprising:
applying a remote monitoring device to the air cleaning system or positioning a remote monitoring device relative to the air cleaning system thereby to perform a periodic monitoring function;
during the periodic monitoring function:
   capturing sounds of the air cleaning system during use using a microphone and generating microphone signals; and
   processing the microphone signals and monitoring changes in the microphone signals over time;
providing information relating to the filter status based on the evolution of the microphone signals; and
removing the remote monitoring device from the air cleaning system between the periodic monitoring functions.

This method performs monitoring of a filter by externally and remotely monitoring sounds made by the air cleaning system. The monitoring device may be applied to a specific monitoring location of the air cleaning system for the periodic monitoring, for example in the vicinity of an air outlet.

The "applying" of the remote monitoring device comprises positioning the remote monitoring device relative to the air cleaning system. This may be achieved based on physical alignment features, or based on the user being guided to a particular location. The positioning may be to a specific location or to a general area. In the latter case, the actual location within that general area may be used as an input to determine how the microphone signals are processed.

The method may comprise training and operating a machine learning algorithm to enable information relating to the filter status to be provided based on the evolution of the microphone signals.

The invention also provides a computer program product comprising computer program code means which is adapted, when said program is run on the said monitoring device, to implement the steps in the method defined above of processing the microphone signals and monitoring changes in the microphone signals over time and providing information relating to the filter status based on the evolution of the microphone signals.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows an air cleaning system and a remote monitoring device;
Figure 2 shows a method for monitoring an air cleaning system for determining when a particle filter of the air cleaning system needs cleaning or replacement;
Figure 3 shows audio signals collected by a smartphone microphone at different filter conditions and different fan speeds; and
Figure 4 shows a plot of sound level versus filter lifetime for three fan speeds.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention which is solely defined by the claims.

These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a monitoring device for monitoring an air cleaning system for determining (in advance) when a particle filter of the air cleaning system needs cleaning or replacement. The monitoring device is a remote unit for application to the air cleaning system when a periodic monitoring function is to be performed. It is used to monitor changes in the sound made by the air cleaning system over time to derive information relating to the filter status.

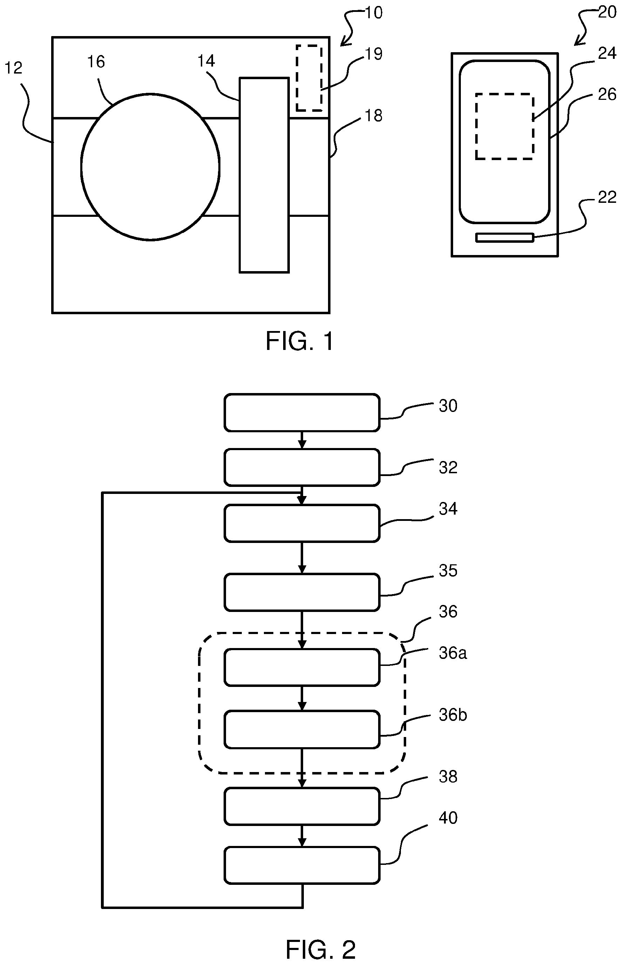

Figure 1 shows an air cleaning system 10 and a remote monitoring device 20.

The air cleaning system 10 comprises an air inlet 12, a particle filter 14, a fan 16 for driving air through the particle filter and an outlet 18.

The air cleaning system further comprises a docking area 19 which functions as a monitoring location to which the remote monitoring device 20 is applied, for performing a periodic monitoring function of the air cleaning system. In particular, the monitoring device 20 provides filter status information such as the remaining filter lifetime (or the proportion of the filter lifetime that has been used, or the remaining proportion of the filter lifetime).

The filter status information may be in the form of a time period, or a usage fraction, or just a progressive warning as the end of life approaches. The status information enables the user to determines (and predict) when the particle filter 14 needs cleaning or replacement. The docking are may comprise a physical docking interface, or simply a marker to identify a particular location.

The monitoring device 20 comprises a microphone 22 for capturing sounds of the air cleaning system during use, a processor 24 for processing the microphone signals and for monitoring changes in the microphone signals over time, and an output device 26 (e.g. a display or touch display) for providing information relating to the filter status based on the evolution of the microphone signals.

As mentioned above, the information provided at the output device is typically an indication of the life stage of the filter (e.g. a percentage of the lifetime that remains) so that an advance warning is provided of the actual end of life. The information may be provided as a visual and/or audible output.

The monitoring device is passive in respect of the sound of the air cleaner, i.e. it picks up the generated air cleaner sounds at a particular location, but is not intended to modify those sounds or generate its own sounds to be picked up by the microphone. Thus, the microphone monitors air cleaner sounds without intended modification of those sounds.

The air cleaning system 10 does not need any on-board sensors for monitoring filter clogging, since the remote monitoring device can be applied to the monitoring location in the docking area. The docking area 19 is for example in the vicinity of the air outlet 18. This is typically the loudest location. However other locations could be used.

The remote monitoring device is used for analyzing sounds of the air cleaning system 10 to detecting the degree of filter clogging. The sound of the air flow passing through the filter changes as a function of the filter clogging, and these changes can be detected and interpreted.

The same monitoring device 20 may be used for multiple air cleaning systems 10, thereby reducing cost. It provides a more more universal approach, since it is not necessary to provide an audio sensor in the air cleaning system itself.

In the example shown, the remote monitoring device 20 is represented as a smartphone (equivalently it may be a tablet), so that the microphone 22 and processor 24 are existing components. An app may simply be loaded onto the smartphone to enable it to function as the monitoring device. Alternatively, a dedicated monitoring device may be provided, but it may be used with multiple air cleaning systems. Such a monitoring device may be provided as a hardware part of the air cleaning system rather than as software for loading onto a totally separate processing device.

The processor 24 operates a machine learning algorithm to interpret the sounds to derive the degree of filter clogging.

Figure 2 shows a method for monitoring an air cleaning system for determining when a particle filter of the air cleaning system needs cleaning or replacement. As explained below, the same processing is used for training of the machine learning part of the method.

In step 30, the remote monitoring device is applied to the air cleaning system when it is first turned on, in particular at the docking area.

In step 32, an audio signal is obtained for the brand new system to be used as a baseline. This baseline may be used as a calibration for that specific air cleaning system.

In step 34, the remote monitoring device is applied to the air cleaning system at a later time, thereby to perform one instance of a periodic monitoring function.

In step 35, microphone sounds are captured of the air cleaning system. The time at which the periodic monitoring should take place may be derived by the remote monitoring device, for example based on regular timing intervals, and the user is alerted to the need to perform a measurement. The time intervals may change as the filter is determined to be reaching its end of life, so that more accurate final indications may be given.

In step 36 the microphone signals are processed to monitor changes in the microphone signals over time. This involves classifying audio patterns in step 36a when the system is used. The same method may be used to training in which case training the algorithm takes place in step 36b by inputting filter lifetime information, for example derived from other sensors. Thus, the training is used to identify audio patterns linked to the filter lifetime.

During use and in training, different audio patterns can be identified, relating to different filter conditions.

The training of the algorithm may involve data from multiple users of the same type of air cleaning system.

In use of the method, information is provided relating to the filter status based on the evolution of the microphone signals in step 38.

The remote monitoring device is removed in step 40 from the air cleaning system, i.e. between the periodic monitoring (or training) functions.

This method performs monitoring of a filter by externally and remotely monitoring sounds made by the air cleaning system. The monitoring device may be applied to a specific monitoring location of the air cleaning system for the periodic monitoring, for example in the vicinity of an air outlet.

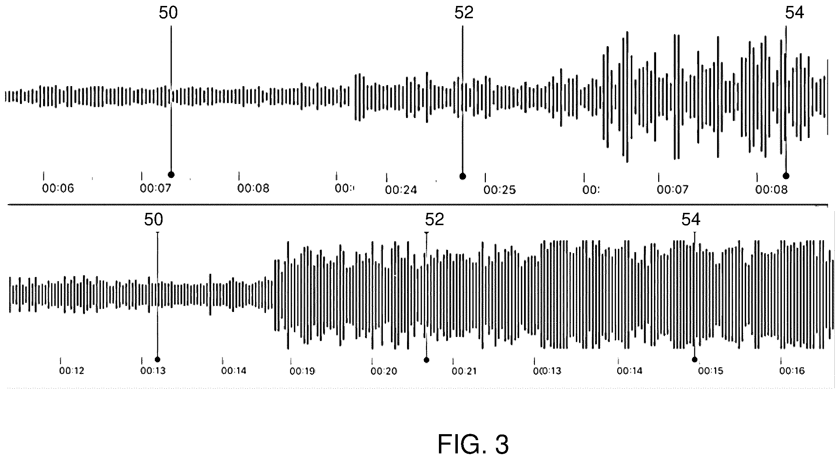

Figure 3 shows audio signals collected by a smartphone microphone at different filter conditions and different fan speeds. The top plot is for a first speed, and the bottom plot is for a higher, second speed. Time instant 50 is for a new filter, time instant 52 is for a filter with 40% of its lifetime remaining, and time instant 54 is for the end of lifetime.

This shows the clear correlation between sound characteristics and remaining filter lifetime.

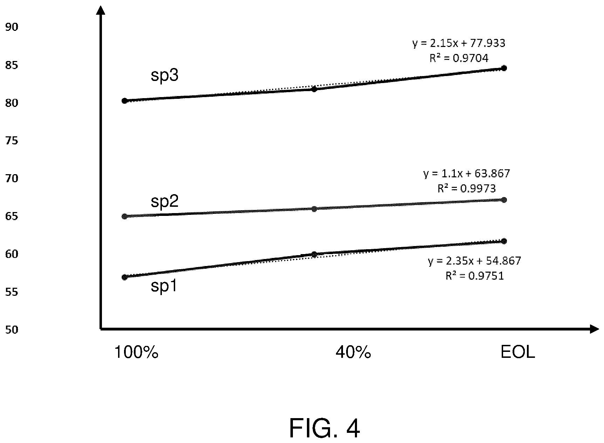

Figure 4 shows a plot of sound level versus remaining filter lifetime for three fan speeds; sp1, sp2 and sp3 (where sp3>sp2>sp1).

It can be seen how noise levels increase as the filter approaches the need for replacement. The noise level can also be used to determine the fan speed setting, for example if the initial baseline calibration involves taking measurements at each fan speed setting.

As mentioned above, the process may use a machine-learning algorithm. A machine-learning algorithm is any self-training algorithm that processes input data in order to produce or predict output data. Here, the input data comprises sound signals and the output data comprises estimated remaining filter lifetime.

Suitable machine-learning algorithms for being employed in the present invention will be apparent to the skilled person. Examples of suitable machine-learning algorithms include decision tree algorithms and artificial neural networks. Other machine-learning algorithms such as logistic regression, support vector machines or Naive Bayesian model are suitable alternatives.

The structure of an artificial neural network (or, simply, neural network) is inspired by the human brain. Neural networks are comprised of layers, each layer comprising a plurality of neurons. Each neuron comprises a mathematical operation. In particular, each neuron may comprise a different weighted combination of a single type of transformation (e.g. the same type of transformation, sigmoid etc. but with different weightings). In the process of processing input data, the mathematical operation of each neuron is performed on the input data to produce a numerical output, and the outputs of each layer in the neural network are fed into the next layer sequentially. The final layer provides the output.

Methods of training a machine-learning algorithm are well known. Typically, such methods comprise obtaining a training dataset, comprising training input data entries (the sounds in this example) and corresponding training output data entries (the corresponding filter lifetime information). An initialized machine-learning algorithm is applied to each input data entry to generate predicted output data entries. An error between the predicted output data entries and corresponding training output data entries may be used to modify the machine-learning algorithm. This process can repeated until the error converges, and the predicted output data entries are sufficiently similar (e.g. ±1%) to the training output data entries. This is commonly known as a supervised learning technique.

For example, where the machine-learning algorithm is formed from a neural network, (weightings of) the mathematical operation of each neuron may be modified until the error converges. Known methods of modifying a neural network include gradient descent, backpropagation algorithms and so on.

The training input data entries correspond to example sound signals in combination with known filter lifetime information.

For a new filter, the lifetime is known (i.e. 100%), and from that point on the algorithm determines the filter lifetime.

The analysis of the sounds picked up by the microphone may comprise only the sound level (sound pressure) at a particular frequency or in a particular frequency band, or it may involve analysis of both sound pressures and frequency content. For example, by analyzing the combination of sound pressure and frequency information, it may be possible to determine which filter in an air cleaning system having multiple filters has come to its end-of-life, e.g. the pre-filter or the main high efficiency particulate air (HEPA) filter. The sound generated by a pre-filter clogged by large particles particles and the sound generated by a HEPA filter loaded with fine particles will show different fingerprints when analyzed in both the sound level and sound frequency domains.

The sound of the fan motor may also be extracted, and used as a cross-validation to the airflow sound to determine filter remaining lifetime more accurately.

In the example above, the air cleaning system has a docking area for the remote monitoring device (microphone). An alternative is for the user to be guided to move the remote monitoring device (i.e. their smartphone) to a desired location, by the app running on the smartphone. Alternatively, the relative positioning between the remote monitoring device and the air cleaning system can be sensed for example based on processing of the image of the cleaning system as viewed by a camera of the remote monitoring device, and the microphone signal processing can take account of the relative positioning. In either case, there is then no need for a physical docking arrangement.

Even if the actual position can be taken into account in the microphone signal processing, the remote monitoring device will still need to be within a certain range of locations, so that sounds can reliably be picked up from the air cleaning system. Thus, there will still be a general location area in which the remote monitoring device needs to be positioned.

The measuring location is thus either fixed (by a physical docking system or by instructing the user to move to the correct location) or else the sound analysis is calibrated for a range of possible locations, and the actual location is then identified. The sound comparisons should be made in respect of the same air flow speed settings.

For example, the measurement process could be combined with Augmented Reality so that when using the app that implements the measurement, the user may be instructed to position their smart phone by performing an alignment using an Augmented Reality image (combining the camera view of the smartphone with a generated overlaid image).

The sound processing may be adapted based on the relative position of the external monitoring device to the air cleaner, if the location of the remote monitoring device is suitable. The monitoring device may first advise the user to move to a more suitable location within the general location area (e.g. closer to the air purifier or closer to the outlet) if needed.

In this way, by using a phone or tablet, the system can achieve control of the quality of the measurement signal with a more intuitive control of the system, from the user point of view.

The user may for example use the remote monitoring device to measure multiple air cleaning systems. In order to select which air cleaning system is to be monitored, the air cleaning system may simply be placed in the view of the smartphone or tablet camera using the Augmented Reality interface. This approach may also be used to monitor different brands of air cleaner. The recorded sounds may for example be uploaded for remote processing (i.e. uploaded to a cloud storage and processing system) and the sound analysis takes account of the air cleaner brand. The air cleaner brand may be identified automatically (e.g. based on image analysis) or it may be input by the user.

The invention is of interest for air purifiers generally, such as fresh air purification units (FAPUs), and other air management systems and HVAC (heating, ventilation and air conditioning) systems.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

## Claims

1. A monitoring device (20) for monitoring an air cleaning system for determining when a particle filter of the air cleaning system needs cleaning or replacement, wherein the monitoring device comprises a remote monitoring device which is for application to the air cleaning system when a periodic monitoring function is to be performed and for removal from the air cleaning system between periodic monitoring functions, wherein the monitoring device comprises:
a microphone (22) adapted to capture sounds of the air cleaning system during use and generating microphone signals;
the monitoring device being **characterized in that** it further comprises a processor (24) adapted to process the microphone signals and for monitoring changes in the microphone signals over time; and
an output device (26) adapted to provide information relating to the filter status based on the evolution of the microphone signals.

2. A monitoring device as claimed in claim 1, wherein the monitoring device (20) is for application to a specific monitoring location (19) of the air cleaning system or for positioning at a specific monitoring location relative to the air cleaning system.

3. A monitoring device as claimed in claim 2, wherein the specific monitoring location (19) of the air cleaning system is in the vicinity of an air outlet (18).

4. A monitoring device as claimed in any one of claims 1 to 3, wherein the processor (24) is adapted to operate a machine learning algorithm.

5. A monitoring device as claimed in any one of claims 1 to 4, comprising a smartphone or tablet.

6. An air cleaning system, comprising:
an air inlet (12);
a particle filter (14);
a fan (16) for driving air through the particle filter; and
an outlet (18),
wherein the air cleaning system further comprises a docking area (19) which is adapted to function as a monitoring location to which the monitoring device (20) of claim 1 to 5 is applied, for performing a periodic monitoring function of the air cleaning system, thereby for providing information relating to the filter status based on the evolution of the sound generated at the docking area.

7. An air cleaning system as claimed in claim 6, wherein the docking area (19) is in the vicinity of the air outlet.

8. An air cleaning system as claimed in claim 6 or 7, the monitoring device (20) comprises a smartphone or tablet configured with software for loading on the smartphone or tablet thereby to implement the remote monitoring device.

9. A method for monitoring an air cleaning system for determining when a particle filter of the air cleaning system needs cleaning or replacement, comprising:
(34) applying a remote monitoring device to the air cleaning system or positioning a remote monitoring device relative to the air cleaning system thereby to perform a periodic monitoring function;
during the periodic monitoring function:
(35) capturing sounds of the air cleaning system during use using a microphone and generating microphone signals; and
(36) processing the microphone signals and monitoring changes in the microphone signals over time;
(38) providing information relating to the filter status based on the evolution of the microphone signals; and
(40) removing the remote monitoring device from the air cleaning system between the periodic monitoring functions.

10. A method as claimed in claim 9, comprising applying the monitoring device to a specific monitoring location (19) of the air cleaning system for the periodic monitoring.

11. A method as claimed in claim 10, wherein the specific monitoring location (19) of the air cleaning system is in the vicinity of an air outlet.

12. A method as claimed in any one of claims 9 to 11, comprising training and operating a machine learning algorithm to enable information relating to the filter status to be provided based on the evolution of the microphone signals.

13. A computer program product comprising computer program code means which is adapted, when said program is run on a monitoring device according to claim 1, to implement the steps in the method of any one of claims 9 to 12 of processing the microphone signals and monitoring changes in the microphone signals over time and providing information relating to the filter status based on the evolution of the microphone signals.

## Patentansprüche

1. Überwachungsvorrichtung (20) zum Überwachen eines Luftreinigungssystems, zum Bestimmen, wann ein Partikelfilter des Luftreinigungssystems zu reinigen oder auszutauschen ist, wobei die Überwachungsvorrichtung eine Fernüberwachungsvorrichtung umfasst, die zur Anwendung auf das Luftreinigungssystem, wenn eine periodische Überwachungsfunktion auszuführen ist und zum Entfernen aus dem Luftreinigungssystem zwischen periodischen Überwachungsfunktionen dient, wobei die Überwachungsvorrichtung umfasst:
ein Mikrofon (22), das dazu angepasst ist, Geräusche des Luftreinigungssystems bei Gebrauch zu erfassen und Mikrofonsignale zu erzeugen;
wobei die Überwachungsvorrichtung **dadurch gekennzeichnet ist, dass** sie weiter einen Prozessor (24) umfasst, der dazu angepasst ist, die Mikrofonsignale zu verarbeiten und zum Überwachen von Änderungen in den Mikrofonsignalen im Laufe der Zeit; und
eine Ausgabevorrichtung (26), das dazu angepasst ist, Informationen in Bezug auf den Filterstatus basierend auf der Entwicklung der Mikrofonsignale bereitzustellen.

2. Überwachungsvorrichtung nach Anspruch 1, wobei die Überwachungsvorrichtung (20) zur Anwendung auf eine spezifische Überwachungsstelle (19) des Luftreinigungssystems oder zum Positionieren an einer spezifischen Überwachungsstelle in Bezug auf das Luftreinigungssystem dient.

3. Überwachungsvorrichtung nach Anspruch 2, wobei die spezifische Überwachungsstelle (19) des Luftreinigungssystems in der Nähe eines Luftauslasses (18) liegt.

4. Überwachungsvorrichtung nach einem der Ansprüche 1 bis 3, wobei der Prozessor (24) dazu angepasst ist, einen Maschinenlernalgorithmus zu betreiben.

5. Überwachungsvorrichtung nach einem der Ansprüche 1 bis 4, umfassend ein Smartphone oder Tablet.

6. Luftreinigungssystem, umfassend:
einen Lufteinlass (12);
ein Partikelfilter (14);
einen Ventilator (16) zum Treiben von Luft durch das Partikelfilter; und
einen Auslass (18),
wobei das Luftreinigungssystem weiter einen Andockbereich (19) umfasst, der dazu angepasst ist, als Überwachungsstelle zu fungieren, auf welche die Überwachungsvorrichtung (20) nach Anspruch 1 bis 5 angewendet wird, zum Durchführen einer periodischen Überwachungsfunktion des Luftreinigungssystems, um so Informationen in Bezug auf den Filterstatus basierend auf der Entwicklung des im Andockbereich erzeugten Geräusches bereitzustellen.

7. Luftreinigungssystem nach Anspruch 6, wobei der Andockbereich (19) in der Nähe des Luftauslasses liegt.

8. Luftreinigungssystem nach Anspruch 6 oder 7, wobei die Überwachungsvorrichtung (20) ein Smartphone oder Tablet umfasst, das mit Software zum Laden auf das Smartphone oder Tablet konfiguriert ist, um so die Fernüberwachungsvorrichtung zu implementieren.

9. Verfahren zum Überwachen eines Luftreinigungssystems zum Bestimmen, wann ein Partikelfilter des Luftreinigungssystems zu reinigen oder auszutauschen ist, umfassend:
(34) Anwenden einer Fernüberwachungsvorrichtung auf das Luftreinigungssystem oder Positionieren einer Fernüberwachungsvorrichtung in Bezug auf das Luftreinigungssystem, um dadurch eine periodische Überwachungsfunktion auszuführen;
während der periodischen Überwachungsfunktion:
(35) Erfassen von Geräuschen des Luftreinigungssystems bei Gebrauch unter Verwendung eines Mikrofons und Erzeugen von Mikrofonsignalen; und
(36) Verarbeiten der Mikrofonsignale und Überwachen von Änderungen der Mikrofonsignale im Laufe der Zeit;
(38) Bereitstellen von Informationen in Bezug auf den Filterstatus basierend auf der Entwicklung der Mikrofonsignale; und
(40) Entfernen der Fernüberwachungsvorrichtung aus dem Luftreinigungssystem zwischen den periodischen Überwachungsfunktionen.

10. Verfahren nach Anspruch 9, umfassend das Anwenden der Überwachungsvorrichtung auf eine spezifische Überwachungsstelle (19) des Luftreinigungssystems zur periodischen Überwachung.

11. Verfahren nach Anspruch 10, wobei die spezifische Überwachungsstelle (19) des Luftreinigungssystems in der Nähe eines Luftauslasses liegt.

12. Verfahren nach einem der Ansprüche 9 bis 11, umfassend das Trainieren und Betreiben eines Maschinenlernalgorithmus, um zu ermöglichen, dass Informationen in Bezug auf den Filterstatus basierend auf der Entwicklung der Mikrofonsignale ermöglicht werden.

13. Computerprogrammprodukt, das Computerprogrammcodemittel umfasst, die dazu angepasst sind, wenn das Programm in einer Überwachungsvorrichtung nach Anspruch 1 läuft, die Schritte im Verfahren nach einem der Ansprüche 9 bis 12 zum Verarbeiten der Mikrofonsignale und Überwachen von Änderungen in den Mikrofonsignalen über die Zeit zu implementieren und Informationen in Bezug auf den Filterstatus basierend auf der Entwicklung der Mikrofonsignale bereitzustellen.

## Revendications

1. Dispositif de surveillance (20) pour surveiller un système d'épuration de l'air pour déterminer lorsqu'un filtre à particules du système d'épuration de l'air a besoin d'être nettoyé ou remplacé, dans lequel le dispositif de surveillance comprend un dispositif de surveillance à distance qui est destiné à être appliqué au système d'épuration de l'air lorsqu'une fonction de surveillance périodique doit être exécutée et à être retiré du système d'épuration de l'air entre des fonctions de surveillance périodique, dans lequel le dispositif de surveillance comprend :
un microphone (22) adapté pour capturer des sons du système d'épuration de l'air pendant l'utilisation et générant des signaux de microphone ;
le dispositif de surveillance étant **caractérisé en ce qu'**il comprend en outre un processeur (24) adapté pour traiter les signaux de microphone et pour surveiller des changements des signaux de microphone au fil du temps ; et
un dispositif de sortie (26) adapté pour fournir des informations relatives à l'état de filtre sur la base de l'évolution des signaux de microphone.

2. Dispositif de surveillance selon la revendication 1, dans lequel le dispositif de surveillance (20) est destiné à être appliqué en un emplacement de surveillance spécifique (19) du système d'épuration de l'air ou à être positionné en un emplacement de surveillance spécifique par rapport au système d'épuration de l'air.

3. Dispositif de surveillance selon la revendication 2, dans lequel l'emplacement de surveillance spécifique (19) du système d'épuration de l'air est à proximité d'une sortie d'air (18).

4. Dispositif de surveillance selon l'une quelconque des revendications 1 à 3, dans lequel le processeur (24) est adapté pour exploiter un algorithme d'apprentissage automatique.

5. Dispositif de surveillance selon l'une quelconque des revendications 1 à 4, comprenant un téléphone intelligent ou une tablette.

6. Système d'épuration de l'air, comprenant :
une entrée d'air (12) ;
un filtre à particules (14) ;
un ventilateur (16) pour entraîner l'air à travers le filtre à particules ; et
une sortie (18),
dans lequel le système d'épuration de l'air comprend en outre une zone d'accueil (19) qui est adaptée pour servir d'emplacement de surveillance auquel le dispositif de surveillance (20) selon les revendications 1 à 5 est appliqué, pour réaliser une fonction de surveillance périodique du système d'épuration de l'air, pour fournir ainsi des informations relatives à l'état de filtre sur la base de l'évolution du son généré au niveau de la zone d'accueil.

7. Système d'épuration de l'air selon la revendication 6, dans lequel la zone d'accueil (19) est à proximité de la sortie d'air.

8. Système d'épuration de l'air selon la revendication 6 ou 7, le dispositif de surveillance (20) comprend un téléphone intelligent ou une tablette configurés avec un logiciel destiné à être chargé sur le téléphone intelligent ou la tablette pour mettre ainsi en oeuvre le dispositif de surveillance à distance.

9. Procédé de surveillance d'un système d'épuration de l'air pour déterminer lorsqu'un filtre à particules du système d'épuration de l'air a besoin d'être nettoyé ou remplacé, comprenant :
(34) l'application d'un dispositif de surveillance à distance au système d'épuration de l'air ou le positionnement d'un dispositif de surveillance à distance par rapport au système d'épuration de l'air pour réaliser ainsi une fonction de surveillance périodique ;
pendant la fonction de surveillance périodique :
(35) la capture de sons du système d'épuration de l'air pendant l'utilisation en utilisant un microphone et la génération de signaux de microphone ; et
(36) le traitement des signaux de microphone et la surveillance de changements des signaux de microphone au fil du temps ;
(38) la fourniture d'informations relatives à l'état de filtre sur la base de l'évolution des signaux de microphone ; et
(40) le retrait du dispositif de surveillance à distance du système d'épuration de l'air entre les fonctions de surveillance périodique.

10. Procédé selon la revendication 9, comprenant l'application du dispositif de surveillance en un emplacement de surveillance spécifique (19) du système d'épuration de l'air pour la surveillance périodique.

11. Procédé selon la revendication 10, dans lequel l'emplacement de surveillance spécifique (19) du système d'épuration de l'air est à proximité d'une sortie d'air.

12. Procédé selon l'une quelconque des revendications 9 à 11, comprenant le formation et l'exploitation d'un algorithme d'apprentissage automatique pour permettre à des informations relatives à l'état de filtre d'être fournies sur la base de l'évolution des signaux de microphone.

13. Produit de programme informatique comprenant un moyen de code de programme informatique qui est adapté, lorsque ledit programme est exécuté sur un dispositif de surveillance selon la revendication 1, pour mettre en oeuvre les étapes du procédé selon l'une quelconque des revendications 9 à 12 de traitement des signaux de microphone et de surveillance de changements des signaux de microphone au fil du temps et de fourniture d'informations relatives à l'état de filtre sur la base de l'évolution des signaux de microphone.
